# EUROPEAN PATENT APPLICATION

(11) **EP 3 243 570 A1**
(43) Date of publication of application: **15.11.2017**
(21) Application number: 17000659.7
(22) Date of filing: 19.04.2017
(51) Int. Cl.: B05B 7/04, B01D 53/79, B05B 7/12

(54) **AN ATOMIZING NOZZLE ASSEMBLY FOR A REAGENT, IN PARTICULAR FOR A REAGENT FOR A SELECTIVE NON-CATALYTIC REDUCTION OF NITROGEN OXIDES IN COMBUSTION GASES OF POWER BOILERS**

(30) Priority: 19.04.2016 PL 41689316
(71) Applicant: Innowacyjne Przedsiebiorstwo Wielobranzowe POLIN Spólka z o.o., 40-028 Katowice (PL)
(72) Inventor: PIKULA, Wladyslaw, 40-553 Katowice (PL); SZAFRUGA, Krzysztof, 44-145 Pilchowice (PL); LUPIERZ, Pawel, 44-100 Gliwice (PL); WILLMAN, Patryk, 44-100 Gliwice (PL)
(74) Representative: Lukaszyk, Szymon

(57) **Abstract**

The invention relates to an atomizing nozzle assembly (1) for a reagent, in particular a reagent for a selective non-catalytic reduction of nitrogen oxides in combustion gases of power boilers, comprising a chamber (11) of supplying gaseous medium, preferably compressed air, provided with the first outlet opening (111) of the atomizing nozzle assembly (1), wherein in the chamber (11) an internal nozzle (12) is arranged for supplying a reagent and provided with the second outlet opening (122) of the internal nozzle (12), wherein the internal nozzle (12) is inserted into the first outlet opening (111) of the chamber (11) and comprises at least one, preferably longitudinal, atomizing cutout (123) formed in its wall and having an exposed part (1231) open into the interior space of the chamber (11), and the atomizing nozzle assembly (1) additionally comprises a control arrangement for controlling the area of the exposed part (1231) of the atomizing cutout (123) of the internal nozzle (12). In order to provide that such an atomizing nozzle assembly (1) is of a simple construction and improved operating characteristics, said control arrangement for controlling the area of the exposed part (1231) of the atomizing cutout (123) comprises at least one replaceable spacer adjustment head (14) determining the position of the first outlet opening (111) of the chamber (11) relative to the atomizing cutout (123).

## Description

The present invention relates to an atomizing nozzle assembly for a reagent, in particular a reagent for a selective non-catalytic reduction of nitrogen oxides in combustion gases of power boilers, comprising a chamber of supplying gaseous medium, preferably compressed air, provided with the first outlet opening of the atomizing nozzle assembly, wherein in the chamber an internal nozzle is arranged for supplying a reagent and provided with the second outlet opening of the internal nozzle, wherein the internal nozzle is inserted into the first outlet opening of the chamber and comprises at least one, preferably longitudinal, atomizing cutout formed its wall and having an exposed part open into the interior space of the chamber, and the atomizing nozzle assembly additionally comprises a control arrangement for controlling the area of the exposed part of the atomizing cutout of the internal nozzle.

### Background of the Invention

An atomizing nozzle assembly of the above described construction is known from the Polish patent application P. 413548 filed by the applicant of the present application. Such an atomizing nozzle assembly may operate individually and independently or may constitute a component of a lance arrangement for injecting a reagent, such as for example a lance arrangement for a selective non-catalytic reduction of nitrogen oxides in combustion gases of power boilers.

The object of the present invention was to provide an atomizing nozzle assembly for injecting a liquid reagent in a stream of gaseous medium in SNCR systems for reducing nitrogen oxides in combustion gases of power boilers, which shall feature a simple construction and improved operating characteristics.

### Summary of the Invention

According to the present invention there is provided the atomizing nozzle assembly for a reagent, in particular a reagent for a selective non-catalytic reduction of nitrogen oxides in combustion gases of power boilers, as described in the outset, which is characterized in that the control arrangement for controlling the area of the exposed part of the atomizing cutout comprises at least one replaceable spacer adjustment head determining the position of the first outlet opening of the chamber relative to the atomizing cutout.

The replaceable spacer adjustment head ensures a simplicity of assembling as well as disassembling the nozzle assembly, for example in order to replace a given head with another head of a different length. A replacement of such a head may be effected directly in a location of an installation and operation of an atomizing nozzle assembly of the present invention, without a necessity of its transportation to an external workshop. Thanks to such a construction, a number of elements of such an atomizing nozzle assembly is smaller than a corresponding number of elements of known atomizing nozzle assemblies, such as for example the atomizing nozzle assembly disclosed in the patent application P. 413548.

In some preferred embodiments, said at least one replaceable spacer adjustment head may have the first connection adapter screwed to a connection flange of a lance and the second connection adapter screwed to a connection flange of a housing.

Such type of a connection does not require an access to a workshop (comprising for example vices). The atomizing nozzle assembly of the present invention may be disassembled using any arbitrary appropriate wrench, for example a hex key.

Furthermore, circumferential seals, preferably O-ring seals, may be preferably arranged between the connection adapters and the connection flanges.

O-ring seals are normalized elements and therefore in a case of a necessity of replacement with new ones they are easily accessible and delivery thereof is fast and problem-free, what results in a decrease of servicing costs.

The lance has preferably an elongated outlet end part.

The atomizing nozzle assembly proposed according to the present invention features a high degree of simplicity, resulting among other things in providing a reliable method of an adjustment of an atomization degree of a SNCR reagent in a gaseous medium and thus a reliable method of an adjustment of a demand for gaseous medium, commonly such as compressed air. Such an adjustment may be effected in a state after demounting of the nozzle assembly or during an operation of the assembly. The adjustment during an operation of the nozzle assembly causes that the assembly of the present invention is very advantageous for an employment in large industrial plants operating in a continuous mode, for which interruptions of operation are very expensive. Examples of such plants are SNCR systems of power boilers and many other industrial installations.

### Brief description of drawings

The invention shall be described and explained below in reference to its preferred embodiment and in the connection with the attached drawings wherein:

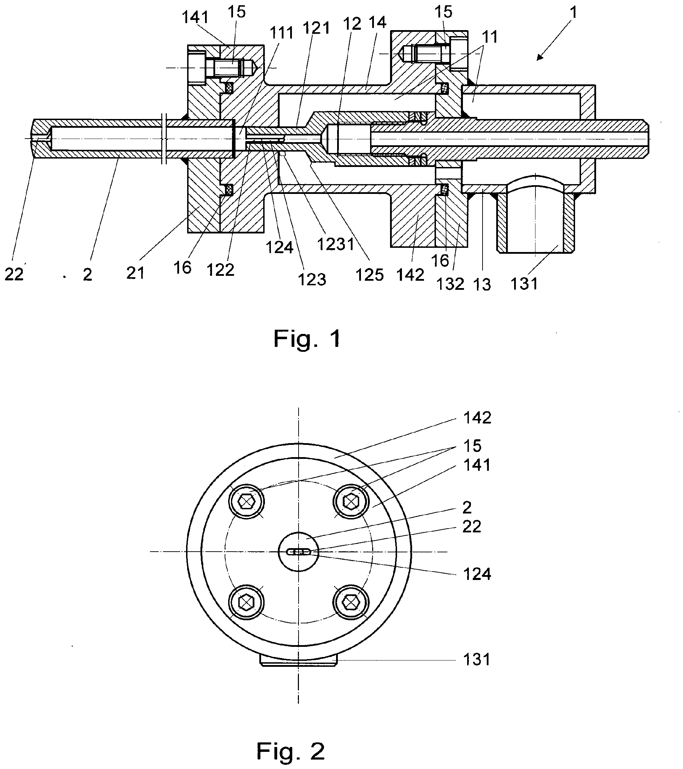

Fig.1 presents a longitudinal-sectional view of an exemplary embodiment of an atomizing nozzle assembly according to the present invention, and
Fig. 2 presents a front view of the atomizing nozzle assembly of Fig. 1.

### Brief description of preferred embodiment

An atomizing nozzle assembly 1 comprises a housing 13 having a connector pipe 131 for coupling an installation of a compressed air supply. The first connection flange 132 is welded to the housing. The second connection flange 21 is welded to a lance 2 for injecting a reagent. Between the connection flanges 21 and 132 there is arranged a replaceable spacer adjustment head 14 having connection adapters 141 and 142 which are appropriately screwed to the connection flanges 21 and 132 respectively, each by means of four socket screws 15. Circumferential O-ring seals 16 are arranged between the connection flanges 21 and 132 and the connection adapters 141 and 142.

The interior space of the housing 13 and the interior space of the spacer adjustment head 14 define a chamber 11 of supplying gaseous medium, wherein the chamber 11 encloses an internal nozzle 12 of supplying a reducing reagent for a SNCR reduction.

In the spacer adjustment head 14, and more precisely in its connection adapter 141, there is formed the first outlet opening 111 of the chamber 11. The internal nozzle 12, and more precisely its end part 121 having the second outlet opening 122, is inserted into the first outlet opening 111. The outer diameter of the cylindrical end part 121 corresponds substantially to the internal diameter of the first outlet opening 111 of the chamber 11 in the spacer adjustment head 14.

In the wall of the internal nozzle 12 in the area of its cylindrical end part 121 there are formed two similar longitudinal atomization cutouts 123 located oppositely to each other on the circumference of the cylindrical end part 121. The cutouts 123 extend parallelly relative to the longitudinal axis of the internal nozzle 12 and are open at the edge of the second outlet opening 122 of the end part 121 of the internal nozzle 12. Each cutout 123 has an exposed part 1231 which is open into the interior space of the chamber 11 and through which gaseous medium flows from the chamber 11 of the nozzle assembly 1 into the channel 124 of the internal nozzle 12. In the nozzle assembly of the present invention, an atomization chamber is created by the internal channel 124 of the internal nozzle 12 in the area of its cutouts 123 which in the depicted embodiment are arranged in the area of the end part 121. The end part 121 transforms in the inward direction into a conical part 125 of the internal nozzle 12.

The replaceable spacer adjustment head 14 mounted between the housing and the lance 2 forms a control arrangement for controlling the area of the exposed parts 1231 of the atomizing cutouts 123 of the internal nozzle 12. The length of the spacer adjustment head 14 defines the surface areas of the exposed parts 1231 which are open into the interior space of the chamber 11, and thus also defines the amount of the gaseous medium flowing through the cutouts 123 into the interior space of the internal nozzle 12. Thus a change of the length of the spacer adjustment head 14 causes a change of an atomization degree of the reagent supplied through an elongated outlet end part 22 of the lance 2 into a power boiler that is not shown in the drawings.

Atomization of a reagent in gaseous medium is effected in the nozzle assembly 1 as follows. Gaseous working medium, such as compressed air, is supplied through the connection adapter 131 to the chamber 11 enclosing the internal nozzle 12. Liquid reagent is supplied to the internal nozzle 12 and flows toward its end part. The gaseous medium flows from the chamber 11 through the exposed parts 1231 of the cutouts 123, open into the interior space of the chamber 11, and thus induces an atomization of the SNCR reagent flowing through this internal nozzle 12 in the gaseous medium. In a result of such an atomization process, at the outlet of the area with the atomization cutouts 123, an atomized mixture is obtained and leaves the chamber 11 through the elongated outlet end part 22.

The above described embodiment of the present invention is merely exemplary. The figures are not necessarily to scale, and some features may be exaggerated or minimized. These and other factors however should not be considered as limiting the spirit of the invention, the intended scope of protection of which is indicated in appended claims.

### List of reference numerals

- 1.: atomizing nozzle
11. chamber
111. first outlet opening
12. internal nozzle
121. cylindrical end part
122. second outlet opening
123. atomizing cutout
1231. exposed part
124. internal channel
125. conical part
13. housing
131. connector pipe
132. connection flange
14. replaceable spacer adjustment head
141. connection adapter
142. connection adapter
15. socket screw
16. circumferential seal (O-ring)
- 2.: lance
21. connection flange
22. elongated outlet end part

## Claims

1. An atomizing nozzle assembly (1) for a reagent, in particular a reagent for a selective non-catalytic reduction of nitrogen oxides in combustion gases of power boilers, comprising a chamber (11) of supplying gaseous medium, preferably compressed air, provided with the first outlet opening (111) of the atomizing nozzle assembly (1), wherein in the chamber (11) an internal nozzle (12) is arranged for supplying a reagent and provided with the second outlet opening (122) of the internal nozzle (12), wherein the internal nozzle (12) is inserted into the first outlet opening (111) of the chamber (11) and comprises at least one, preferably longitudinal, atomizing cutout (123) formed in its wall and having an exposed part (1231) open into the interior space of the chamber (11), and the atomizing nozzle assembly (1) additionally comprises a control arrangement for controlling the area of the exposed part (1231) of the atomizing cutout (123) of the internal nozzle (12), **characterized in that** the control arrangement for controlling the area of the exposed part (1231) of the atomizing cutout (123) comprises at least one replaceable spacer adjustment head (14) determining the position of the first outlet opening (111) of the chamber (11) relative to the atomizing cutout (123).

2. The atomizing nozzle assembly according to Claim 1, **characterized in that** said at least one replaceable spacer adjustment head (14) has the first connection adapter (141) screwed to a connection flange (12) of a lance (2) and the second connection adapter (142) screwed to a connection flange (132) of a housing (13).

3. The atomizing nozzle assembly according to Claim 2, **characterized in that** circumferential seals (16), preferably O-rings, are arranged between the connection adapters (141, 142) and the connection flanges (21, 132).

4. The atomizing nozzle assembly according to Claim 1 or 2 or 3, **characterized in that** the lance (2) has an elongated outlet end part (22).
